# EUROPEAN PATENT APPLICATION

(11) **EP 4 001 066 A1**
(43) Date of publication of application: **25.05.2022**
(21) Application number: 20840049.9
(22) Date of filing: 13.07.2020
(51) Int. Cl.: B62D 25/14, B60K 37/00

(54) **DASHBOARD CROSSBEAM**

(30) Priority: 17.07.2019 CN 201910643158
(71) Applicant: Shanghai Yanfeng Jinqiao Automotive Trim Systems Co., Ltd., Shanghai 201206 (CN)
(72) Inventor: ZHANG, Junwei, Shanghai 200233 (CN)
(74) Representative: Trinks, Ole
(86) International application number: PCT/CN2020/101654
(87) International publication number: WO 2021/008493

(57) **Abstract**

Provided is an instrument panel cross member (100) for a vehicle, comprising: a cross member body (102) made of plastic and comprising a first end (104) and a second end (106), the first end (104) and the second end (106) being adapted to connect with left and right side wall sheet metal panels of the vehicle, respectively; a first structural member (128) made of metal and provided within the cross member body (102); and a first bracket (108) and a second bracket (110) provided in the middle of the cross member body (102) and adapted to support the central console of the vehicle, the first bracket (108) being closer to the first end (104) of the cross member body (102) than the second bracket (110); wherein the first structural member (128) extends from the first end (104) of the cross member body (102) along the longitudinal direction of the cross member body (102), and has a first end (129) and a second end (131), the first end (129) of the first structural member (128) being located at the first end (104) of the cross member body (102), the second end (131) of the first structural member (128) being located between the first bracket (108) and the second bracket (110); the instrument panel cross member (100) features higher mechanical performance, lower manufacturing cost, smaller size and lighter weight, and is easy to manufacture.

## Description

### FIELD OF THE INVENTION

The present invention relates to a vehicle interior trim, and in particular to an instrument panel cross member.

### BACKGROUND

As a vehicle interior trim, vehicle instrument panel is generally integrated with electronic control display components such as a combination meter, a navigation multimedia display and an air conditioning control panel, functional components such as a glove box, a storage box and an air outlet, and various trim components such as a trim skin and a decorative panel. Thus, the vehicle instrument panel is a vehicle interior trim integrating control, storage, trim and other functions.

Vehicle instrument panel assembly typically requires high strength and stiffness. Conventional vehicle instrument panel assembly is supported internally by a steel cross member that comprises a steel cross member body and a plurality of brackets welded or bolted to the cross member body for installing various instrument panel assembly parts.

In consideration of energy conservation and emission reduction of vehicles, it is necessary to develop a lightweight vehicle instrument panel cross member.

At present, a lightweight instrument panel cross member made of aluminum alloy, magnesium alloy, high-strength plastic materials or the like has been developed. For example, Chinese Patents CN 103930339 A and CN 106945729 A discloses instrument panel cross members made of fiber reinforced plastics and aluminum alloys, respectively, which realize the lightweight design of the instrument panel cross member. However, high-strength plastic cross members often occupy inevitably large space and are even more expensive due to the difference in performance between plastic and metals, and aluminum/magnesium alloy cross members are complicated and expensive to produce.

In the prior art, there is also a technical scheme of realizing lightweight instrument panel cross members by combining plastic parts and metal parts. Chinese Patent CN 108639160 A discloses an instrument panel cross member framework structure comprising a cross member made of metal and a framework made of plastic, wherein the cross member is used for connecting with a vehicle body assembly, and the plastic framework is used for mounting accessories in an instrument panel system. The cross member provides a structural support, and the plastic framework is used for mounting accessories; the two are connected by insert injection molding.

However, there remains a need to develop an instrument panel cross member that achieves a good balance among performance, weight, space, cost, manufacturing process and the like.

### SUMMARY

The purpose of the present invention is to provide an instrument panel cross member which features higher mechanical performance, lower manufacturing cost, smaller size and light weight, and is easy to manufacture to solve the problems in the prior art.

The present invention provides an instrument panel cross member for a vehicle, comprising: a cross member body made of plastic and comprising a first end and a second end, the first end and the second end being adapted to connect with left and right sides of metal sheet of the vehicle, respectively; a first structural member made of metal and provided within the cross member body; and a first bracket and a second bracket provided in the middle of the cross member body and adapted to support the central console of the vehicle, the first bracket being closer to the first end of the cross member body than the second bracket and being adapted to connect with floor metal sheets of the vehicle; wherein the first structural member extends from the first end of the cross member body along the longitudinal direction of the cross member body, and has a first end and a second end, the first end of the first structural member being located at the first end of the cross member body, the second end of the first structural member being located between the first bracket and the second bracket.

Optionally, the second end of the first structural member is located at a distance from a center of the cross member body in the longitudinal direction, the distance being in a range of 0 to 150 mm.

Optionally, the instrument panel cross member further comprises a second structural member, wherein the second structural member is made of metal, is provided within the cross member body and extends from the second end of the cross member body along a longitudinal direction of the cross member body.

Optionally, the second structural member has a length of less than or equal to 250 mm.

Optionally, the first structural member and the second structural member are integrally formed with the cross member body by an insert injection molding process.

Optionally, the first structural member and/or the second structural member are provided with a through hole, and/or an interface between the first structural member and/or the second structural member and the cross member body is coated with an adhesive agent.

Optionally, the first structural member and/or the second structural member have a U-shaped structure, an H-shaped structure, or a combination thereof.

Optionally, the first structural member and/or the second structural member are provided with a reinforcing rib.

Optionally, the first structural member and/or the second structural member are made of steel, aluminum alloy or magnesium alloy.

Optionally, the cross member body is made of long glass fiber reinforced polypropylene.

Optionally, the instrument panel cross member further comprises a third bracket adapted to mount a steering column and adapted to connect to a front side wall sheet metal panel of a vehicle, wherein the third bracket is made of metal and is connected to the cross member body, or the third bracket is made of plastic and is integrally formed with the cross member body.

The instrument panel cross member of the present invention comprises a plastic cross member body and a metal structural member provided in the plastic cross member body, and thus combines the advantages of lightness of plastic with high strength and small size of metal. A good balance among the size, weight and mechanical performance of the instrument panel cross member can be achieved by properly designing the positions and/or sizes of the first structural member and the second structural member, such as providing the metal structural member in a primary load-bearing area and the portion where the cross member body is connected to the vehicle body, thus increasing dimensional tolerance and assembly tolerance of the parts, and reducing the difficulty in assembly and manufacturing the instrument panel cross member. In addition, the cross member body can be made of plastic materials with lower cost because the instrument panel cross member is reinforced with the metal structural member, and besides, the integral mechanical performance of the instrument panel cross member is ensured.

### BRIEF DESCRIPTION OF DRAWINGS

Other features and advantages of the present invention will be better understood by alternative embodiments as described in detail below with reference to the drawings, in which identical reference numerals represent identical or similar components.
FIG. 1 is a schematic view of a typical vehicle;
FIG. 2 is a schematic perspective view of the vehicle in FIG. 1;
FIG. 3 is a schematic view of an instrument panel cross member according to Embodiment 1 of the present invention;
FIG. 4 is an exploded schematic view of the instrument panel cross member in FIG. 3;
FIG. 5 is a schematic front view of the instrument panel cross member in FIG. 3;
FIG. 6 is a cross-sectional schematic view of the instrument panel cross member taken along line A-A in FIG. 5;
FIG. 7a is a partial schematic cross-sectional view of the instrument panel cross member taken along line B-B in FIG. 5, showing a first structural member;
FIG. 7b is a partial schematic cross-sectional view of the instrument panel cross member taken along line B-B in FIG. 5, showing a second structural member;
FIG. 8 is a perspective schematic view of an instrument panel cross member according to Embodiment 2 of the present invention, wherein a cross member body is integrally formed with a steering column mounting structure;
FIG. 9 is a partial schematic cross-sectional view of the instrument panel cross member in FIG. 8;
FIG. 10 is a schematic front view of an instrument panel cross member according to Embodiment 3 of the present invention;
FIG. 11 is a cross-sectional schematic view of the instrument panel cross member taken along line A-A in FIG. 10;
FIG. 12a and FIG. 12b are perspective schematic views of the first structural member of the instrument panel cross member according to Embodiment 3 of the present invention viewed from different perspectives;
FIG. 13a and FIG. 13b are perspective schematic views of the second structural member of the instrument panel cross member according to Embodiment 3 of the present invention viewed from different perspectives;
FIG. 14 is a schematic front view of an instrument panel cross member according to Embodiment 4 of the present invention;
FIG. 15 is a perspective schematic view of a first structural member of the instrument panel cross member according to Embodiment 4 of the present invention; and
FIG. 16 is a cross-sectional schematic view of the instrument panel cross member taken along line A-A in FIG. 14.

### DETAILED DESCRIPTION

The implementation and use of the embodiments are discussed in detail below. It should be appreciated, however, that the specific embodiments discussed are merely illustrative of specific ways to implement and use concepts discussed in the present invention, and do not limit the scope of the present invention. The representations of directions such as up, down, left, right and the like, used for explaining the structure and position of each component are not absolute but relative. These directional representations are appropriate when each component is arranged as shown in the drawings, however, these directional representations are also changed accordingly when the position of each component in the drawings is changed.

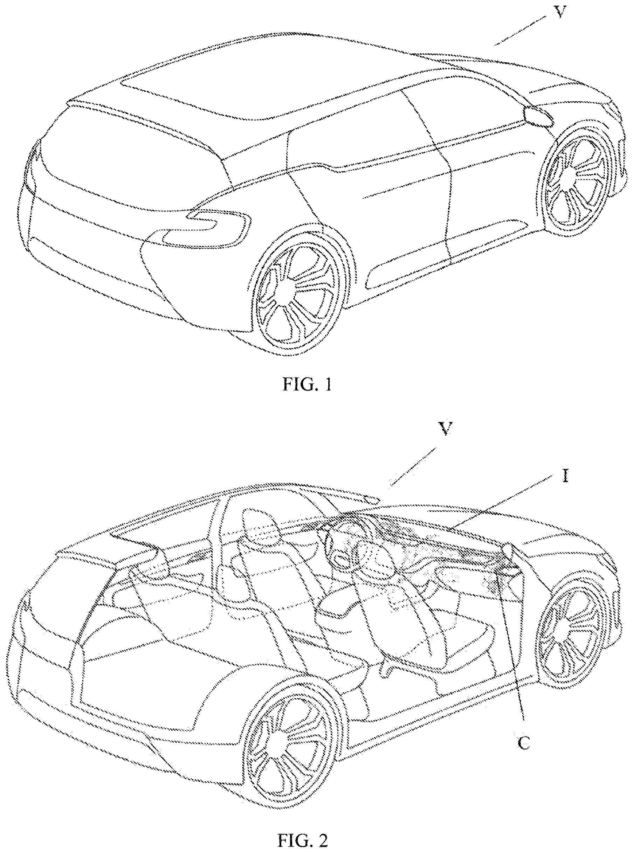

FIG. 1 and FIG. 2 schematically show a typical vehicle V. Generally, the vehicle V comprises an instrument panel I, and an instrument panel cross member C located inside the instrument panel I.

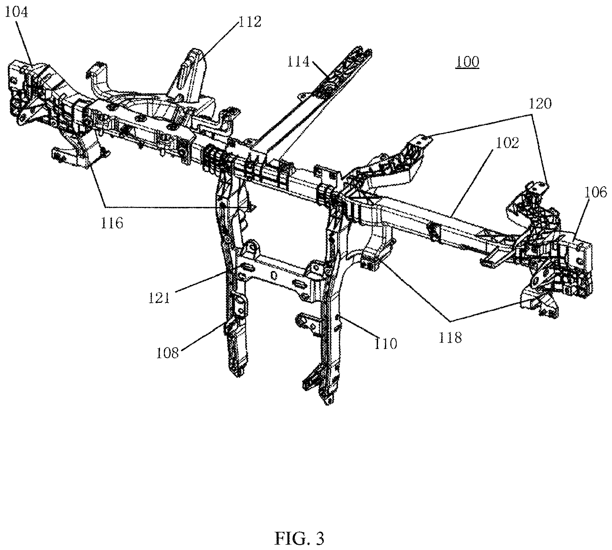

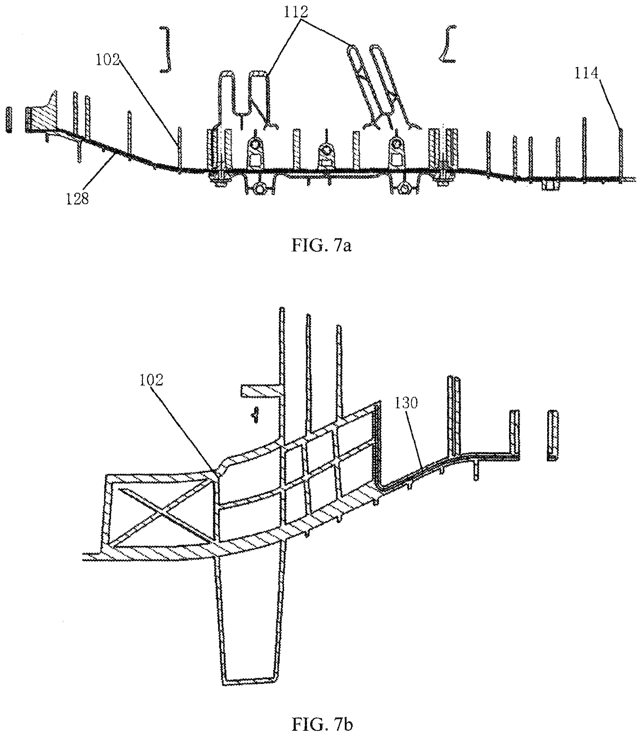

FIGs. 3-7b show the instrument panel cross member 100 according to Embodiment 1 of the present invention. As shown in FIGs. 3-5, instrument panel cross member 100 may comprise a cross member body 102 and brackets provided on cross member body 102 for mounting and/or connection.

The cross member body 102 is made of plastic and comprises a first end 104 and a second end 106. The first end 104 and the second end 106 of the cross member body 102 are adapted to connect with left and right side wall sheet metal panels of the vehicle, respectively.

The bracket for mounting and/or connection may comprise a first bracket 108 and a second bracket 110. The first bracket 108 and the second bracket 110 are provided in the middle of the cross member body 102 and adapted to support the central console of the vehicle, with the first bracket 108 being closer to the first end 104 of the cross member 102 than the second bracket 110. The first bracket 108 is adapted to connect with a floor sheet metal panel of the vehicle. The second bracket 110 may be connected with the floor sheet metal panel of the vehicle, and the second bracket 110 may not be connected with the floor sheet metal panel of the vehicle but may be used to reinforce the instrument panel cross member 100. The first bracket 108 and the second bracket 110 may divide the instrument panel cross member 100 into three sections: a driver side section to the left of the first bracket 108, a central section between the first bracket 108 and the second bracket 110, and a passenger side section to the right of the second bracket 110.

Further, the bracket for mounting and/or connection may further comprise: a third bracket 112 adapted to mount a steering column and adapted to be connected with a front side wall sheet metal panel of the vehicle; a fourth bracket 114 adapted to connect to a front side wall sheet metal panel of the vehicle and located in the middle of the cross member body 102, more specifically, located between the first bracket 108 and a center of the cross member body 102 in the longitudinal direction and close to the first bracket 108; a fifth bracket 116 for mounting a driver side knee-airbag; a sixth bracket 118 for mounting a passenger side knee-airbag; a seventh bracket 120 for mounting a passenger airbag; and an eighth bracket 121 for mounting an air conditioner and an instrument panel. It will be appreciated that the corresponding brackets may be provided according to actual mounting and connection requirements.

The instrument panel cross member 100 may also comprise elements for mounting or assembly, such as sleeves 122, nuts 124, and bolts 126.

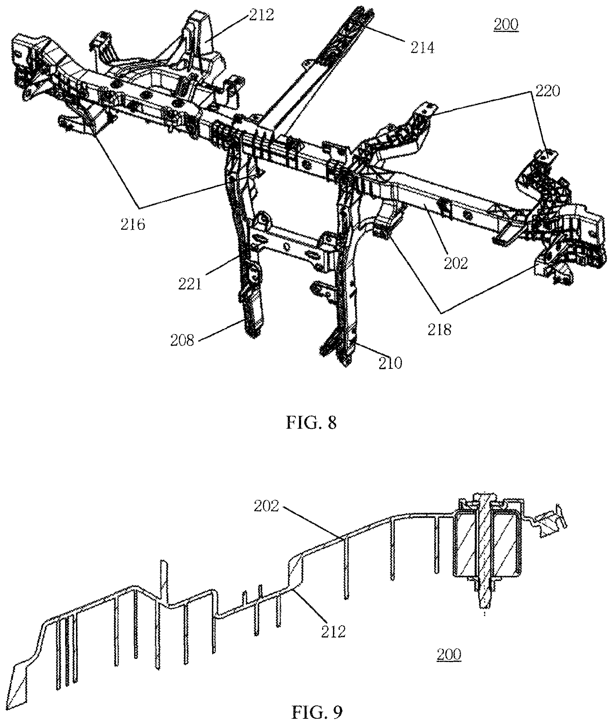

In the present embodiment, the third bracket 112 is made of magnesium alloy and is connected to the cross member body 102 by bolts 126, while the other brackets 108, 110, 114, 116, 118, 120 and 121 are made of plastic and are integrally formed with the cross member body 102 by an injection molding process. It will be appreciated that one or more of the brackets for mounting and/or connection may be separate components and connected to the cross member body by fasteners, or the brackets for mounting and/or connection may each be made of plastic and integrally formed with the cross member body by an injection molding process. For example, in the instrument panel cross member 200 in Embodiment 2 shown in FIG. 8 and FIG. 9, all the brackets 208, 210, 212, 214, 216, 218, 220, 221 for mounting and/or connection are made of plastic and are integrally formed with the cross member body 202 by an injection molding process.

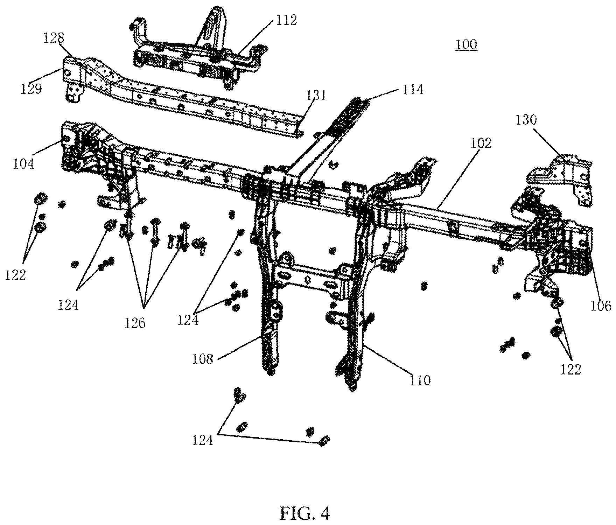

As shown in FIGs. 4-7b, the instrument panel cross member 100 further comprises a first structural member 128 and a second structural member 130 for reinforcement.

Referring to FIGs. 4-7a, the first structural member 128 is made of metal and is provided within the cross member body 102. The first structural member 128 is located in a primary load-bearing area of the instrument panel cross member 100. The first structural member 128 may extend from the first end 104 of the cross member body 102 along the longitudinal direction of the cross member body 102. The first structural member has a first end 129 and a second end 131, the first end 129 of the first structural member 128 is located at the first end 104 of the cross member body 102, and the second end 131 of the first structural member 128 is located between the first bracket 108 and the second bracket 110.

The first structural member 128 extends from the first end 104 of the cross member body 102, so that the first end 104 of the cross member body 102 can be connected with the left side wall sheet metal panel of the vehicle through the first structural member 128 provided therein, which improves the strength and durability of the connection between ends of the instrument panel cross member 100 and the left side wall sheet metal panel of the vehicle, and increases the dimensional tolerance and the assembly tolerance of parts due to the good ductility of metal, thus reducing the difficulty in manufacturing and assembly. Meanwhile, the first structural member 128 extends beyond the position of the first bracket 108 in the longitudinal direction of the cross member body 102, which ensures the load-bearing performance of the driver side section of the instrument panel cross member 100 to which relatively heavy accessories such as a steering column and a steering wheel are connected, reinforces the portion of the cross member body 102 that is connected with the front side wall sheet metal panel and the floor sheet metal panel of the vehicle, and meets the modal requirements and the collision prevention performance of the instrument panel cross member 100.

Preferably, the second end 131 of the first structural member 128 is located at a distance in the range of 0 to 150 mm from the center of the cross member body 102 in the longitudinal direction (the second end 131 of the first structural member 128 may be located at the center of the cross member body 102 in the longitudinal direction or on the left or right side of the center) to achieve a better balance between the weight and mechanical performance of the instrument panel cross member.

In the present embodiment, the first structural member 128 may extend to a position of the fourth bracket 114 in the longitudinal direction of the cross member body 102 to reinforce a portion where the cross member body 102 is connected with the front side wall sheet metal panel of the vehicle.

It will be appreciated that the first structural member 128 may be extended in the case where a relatively heavy accessory such as a large-sized display screen needs to be mounted at the center section of the instrument panel cross member 100 and therefore a relatively large load is borne. For example, the first structural member 128 may extend beyond the center of the cross member body 102 in the longitudinal direction by a distance that may be less than or equal to 150 mm.

Referring to FIG. 3, FIG. 4 and FIG. 7b, the second structural member 130 is also made of metal, and the second structural member 130 is provided within the cross member body 102 and extends from the second end 106 of the cross member body 102 along the longitudinal direction of the cross member body. The second structural member 130 extends from the second end 106 of the cross member body 102, so that the second end 106 of the cross member body 102 can be connected with the right side wall sheet metal panel of the vehicle through the second structural member 130 provided therein, which improves the strength and durability of the connection between ends of the instrument panel cross member 100 and the right side wall sheet metal panel of the vehicle, and increases the dimensional tolerance and the assembly tolerance of parts due to the good ductility of metal, thus reducing the difficulty in manufacturing and assembly.

The length of the second structural member 130 in the longitudinal direction of the cross member body 102 is defined as the length of the second structural member 130. The length of the second structural member 130 may be designed appropriately to cover the area of the instrument panel cross member 100 that needs to be reinforced in the passenger side section (e.g., at the second end 106 where the cross-member main body 102 is connected with the right side wall sheet metal panel of the vehicle, at the sixth bracket 118, and at the seventh bracket 120), thus achieving a good balance between the weight and mechanical performance of the instrument panel cross member 100. Optionally, the second structural member 130 has a length of less than or equal to 250 mm.

As described above, with proper design of positions and/or sizes of the first structural member and the second structural member, the strength and stiffness of the instrument panel cross member are increased, the connection between the instrument panel cross member and the vehicle body is enhanced, the modal requirement and the collision prevention performance of the instrument panel cross member are met, the difficulty in manufacturing and assembly is reduced, and besides, the instrument panel cross member is ensured to have relatively small weight and small size of the main cross member.

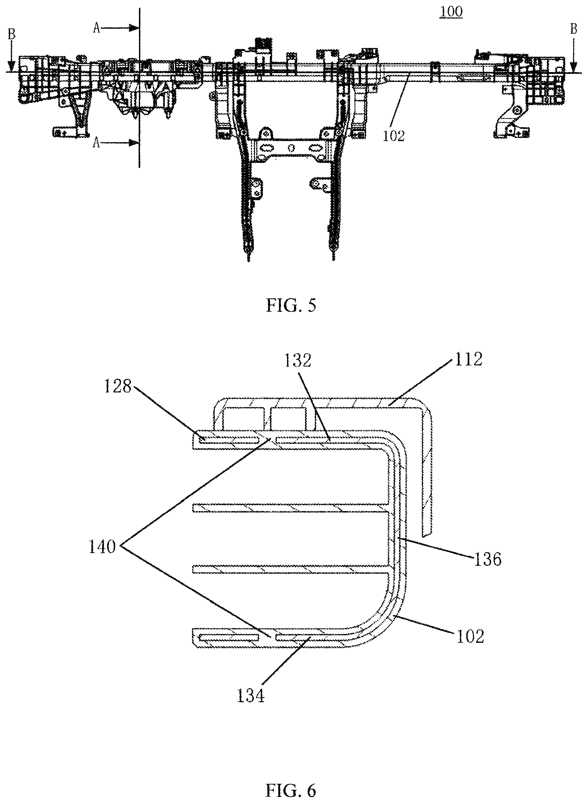

Referring to FIG. 4 and FIG. 6, in Embodiment 1, the first structural member 128 and the second structural member 130 are steel structural members formed by stamping, and the first structural member 128 and the second structural member 130 are similar in configuration. Taking the first structural member 128 as an example, the first structural member 128 has a top plate 132, a bottom plate 134, and a middle plate 136 provided between the top plate 132 and the bottom plate 134. The middle plate 136 is connected with the ends of the top plate 132 and the bottom plate 134, and the top plate 132, the middle plate 136 and the bottom plate 134 have a U-shaped cross-section. That is, the first structural member 128 has a U-shaped structure.

The first structural member 128 and the second structural member 130 may be integrally formed with the cross member body 102 by an insert injection molding process. The first structural member 128 may also be provided with a through hole 140. When the first structural member 128 is integrally formed with the cross member body 102 by an insert injection molding process, plastic may enter the through hole 140, thereby enhancing the binding strength of the first structural member 128 to the cross member body 102. Optionally, an interface between the first structural member 128 and the cross member body 102 may also be coated with an adhesive agent to enhance the binding strength of the first structural member 128 to the cross member body 102.

The first structural member and the second structural member may also be made of aluminum alloy or magnesium alloy and formed by a suitable process (die casting or metal injection molding).

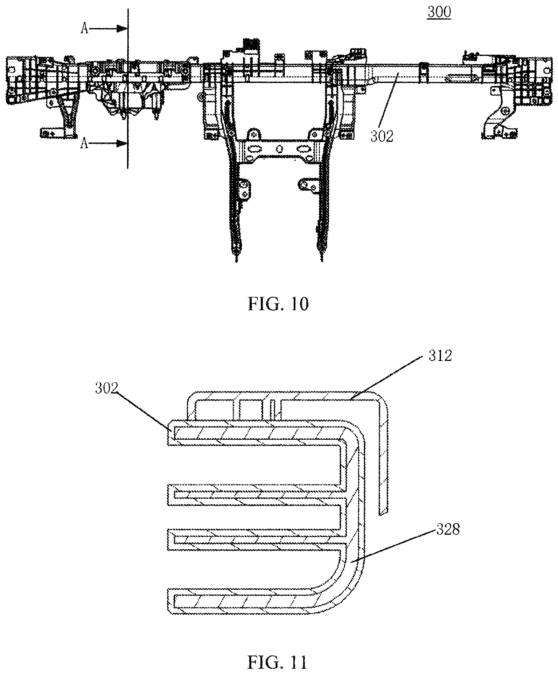

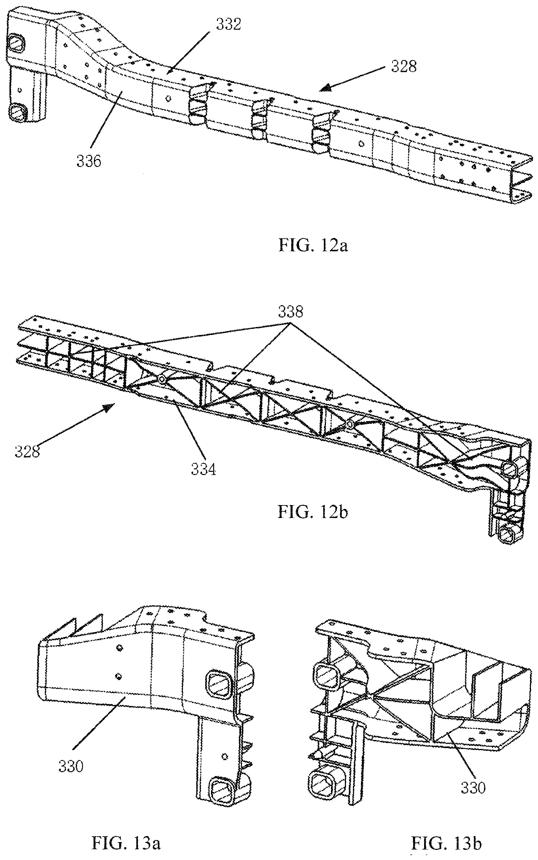

FIGs. 10-13b show an instrument panel cross member 300 according to Embodiment 3 of the present invention. The instrument panel cross member 300 is similar to the instrument panel cross member 100 according to Embodiment 1 of the present invention, with the main difference in that the first structural member 328 and the second structural member 330 of the instrument panel cross member 300 are made of aluminum alloy/magnesium alloy and have a reinforcing rib 338.

In the present embodiment, the first structural member 328 and the second structure 330 of the instrument panel cross member 300 are aluminum/magnesium alloy structures formed by metal injection molding. The first structural member 328 and the second structural member 330 are similar in configuration. Taking the first structural member 328 as an example, the first structural member 328 has a top plate 332, a bottom plate 334, and a middle plate 336 provided between the top plate 332 and the bottom plate 334. The middle plate 336 is connected with the ends of the top plate 332 and the bottom plate 334, and the top plate 332, the middle plate 336 and the bottom plate 334 have a U-shaped cross-section. That is, the first structural member 328 has a U-shaped structure. The first structural member 328 may further comprise a plurality of reinforcing ribs 338, wherein the reinforcing ribs 338 are provided in the space defined by the top plate 332, the bottom plate 334 and the middle plate 336 and connected with at least one of the top plate 332, the bottom plate 334 and the middle plate 336. The reinforcing ribs 338 can be arranged in different patterns depending on reinforcement requirements.

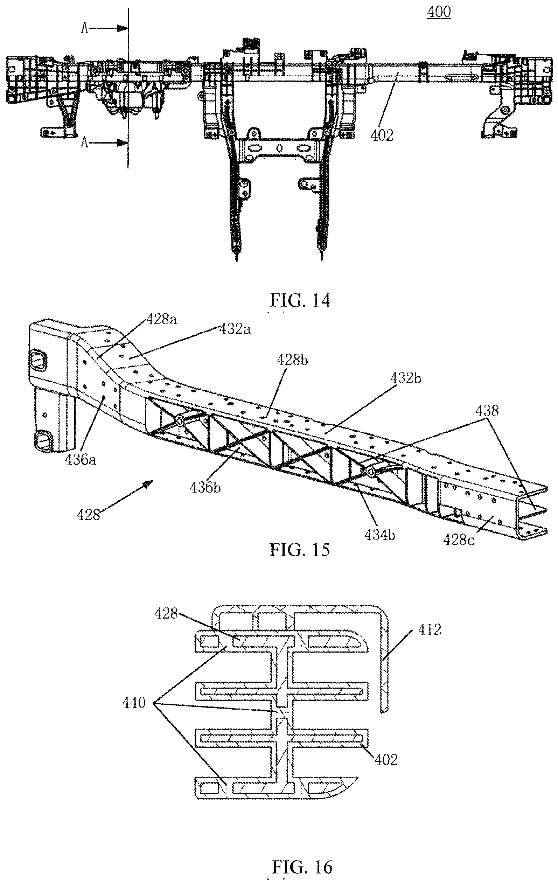

FIGs. 14-16 show the instrument panel cross member 400 according to Embodiment 4 of the present invention. The instrument panel cross member 400 is similar to the instrument panel cross member 300 according to Embodiment 3 of the present invention, with the main difference in that the first structural member 428 of instrument panel cross member 400 has a U-shaped structure and an H-shaped structure.

In the present embodiment, the first structural member 428 may comprise a first section 428a, a second section 428b and a third section 428c. The first section 428a has a top plate 432a, a bottom plate (not shown), and a middle plate 436a provided between the top plate 432a and the bottom plate. The middle plate 436a of the first section 428a is connected with the ends of the top plate 432a and the bottom plate, and the top plate 432a, the middle plate 436a and the bottom plate of the first section 428a have a U-shaped cross-section. That is, the first section has a U-shaped structure. Similarly, the third section 428c also has a U-shaped structure. The second section 428b has a top plate 432b, a bottom plate 434b, and a middle plate 436b provided between the top plate 432b and the bottom plate 434b. The middle plate 436b of the second section 428b is connected with the middle of the top plate 432b and the bottom plate 434b, and the top plate 432b, the middle plate 436b and the bottom plate 434b of the second section have an H-shaped cross-section. That is, the second section has an H-shaped structure. Thus, the first structural member 428 has a combination of a U-shaped structure and an H-shaped structure. It will be appreciated that the first structural member 428 may have an H-shaped structure only. The first structural member 428 may also comprise a reinforcing rib 438.

In addition, the first structural member 428 may be provided with a through hole 440 and/or an interface of the first structural member 428 and the cross member body 402 may be coated with an adhesive agent to enhance the binding strength of the first structural member 428 to the cross member body 402.

In Embodiment 3 and Embodiment 4 of the present invention, since the structural member of aluminum alloy/magnesium alloy is partially provided in the instrument panel cross member, it is easier to manufacture the instrument panel cross member than one entirely made of aluminum alloy/magnesium alloy.

Furthermore, the cross member body of the instrument panel cross member is made of plastic, the cost of which is often directly correlated with its mechanical performance. In order to ensure the overall mechanical performance of the instrument panel cross member, high-mechanical-performance and high-cost plastic materials (such as PA6-GF or PA66-GF) are often adopted in the prior art. However, since the instrument panel cross member is reinforced by the first structural member and the second structural member made of metal in the present invention, the cross member body can be made of a relatively low-cost plastic material (for example, long glass fiber reinforced polypropylene PP-LGF) to reduce the manufacturing cost while ensuring the mechanical performance of the instrument panel cross member.

In the present invention, unless otherwise specifically defined, the terms "connected", "connecting" and "connection" are used in broad senses, and for example, "connection" may be a fixed connection, a detachable connection, or an integral connection; "connection" may be a direct connection or an indirect connection through an intermediary. The specific meanings of the above terms in the present invention can be understood according to specific situations by those of ordinary skill in the art.

Furthermore, it should be appreciated that the embodiments illustrated in FIGs. 1-16 are merely illustrative of the shapes, sizes, and arrangement of various optional components of the instrument panel cross member according to the present invention, and are intended to be illustrative only and not limiting. Various modification could be made to the embodiments of the present invention without departing from the spirit and scope of the present invention.

While the technical content and the technical features of the present invention have been disclosed, it should be appreciated that various changes and improvements of the concept disclosed above can be made by those skilled in the art within the spirit of the present invention, and all of which fall within the scope of the present invention. The above description of the embodiments is intended to be illustrative and not limiting, and the scope of the present invention is defined by the appended claims.

## Claims

1. An instrument panel cross member for a vehicle, comprising: a cross member body made of plastic and comprising a first end and a second end, the first end and the second end being adapted to connect with left and right side wall sheet metal panels of the vehicle, respectively;
- a first structural member made of metal and provided within the cross member body; and
- a first bracket and a second bracket provided in the middle of the cross member body and adapted to support the central console of the vehicle, the first bracket being closer to the first end of the cross member body than the second bracket and being adapted to connect with a floor sheet metal panel of the vehicle;
wherein the first structural member extends from the first end of the cross member body along the longitudinal direction of the cross member body, and has a first end and a second end, the first end of the first structural member being located at the first end of the cross member body, the second end of the first structural member being located between the first bracket and the second bracket.

2. The instrument panel cross member for a vehicle according to claim 1, wherein the second end of the first structural member is located at a distance from a center of the cross member body in the longitudinal direction, the distance being in a range of 0 to 150 mm.

3. The instrument panel cross member for a vehicle according to claim 1, further comprising a second structural member, wherein the second structural member is made of metal, is provided within the cross member body and extends from the second end of the cross member body a longitudinal direction of the cross member body.

4. The instrument panel cross member for a vehicle according to claim 3, wherein the second structural member has a length of less than or equal to 250 mm.

5. The instrument panel cross member for a vehicle according to claim 3, wherein the first structural member and the second structural member are integrally formed with the cross member body by an insert injection molding process.

6. The instrument panel cross member for a vehicle according to claim 5, wherein the first structural member and/or the second structural member are provided with a through hole, and/or
an interface between the first structural member and/or the second structural member and the cross member body is coated with an adhesive agent.

7. The instrument panel cross member for a vehicle according to claim 3, wherein the first structural member and/or the second structural member have a U-shaped structure, an H-shaped structure, or a combination thereof.

8. The instrument panel cross member for a vehicle according to claim 3, wherein the first structural member and/or the second structural member are provided with a reinforcing rib.

9. The instrument panel cross member for a vehicle according to claim 3, wherein the first structural member and/or the second structural member are made of steel, aluminum alloy or magnesium alloy.

10. The instrument panel cross member for a vehicle according to any one of claims 1-9, wherein the cross member body is made of long glass fiber reinforced polypropylene.

11. The instrument panel cross member for a vehicle according to any one of claims 1-9, further comprising a third bracket adapted to mounting a steering column and adapted to connect to a front side wall sheet metal panel of a vehicle, wherein
- the third bracket is made of metal and is connected to the cross member body, or
- the third bracket is made of plastic and is integrally formed with the cross member body.
